# EUROPÄISCHE PATENTANMELDUNG

(11) **EP 3 199 406 A1**
(43) Veröffentlichungstag der Anmeldung: **02.08.2017**
(21) Anmeldenummer: 16153178.5
(22) Anmeldetag: 28.01.2016
(51) Int. Cl.: B60R 9/06, B60R 9/10

(54) **FAHRRADHECKTRÄGER**

(71) Anmelder: Reuter, Martin, 83646 Bad Tölz (DE)
(72) Erfinder: Reuter, Martin, 83646 Bad Tölz (DE)
(74) Vertreter: Lermer, Christoph

(57) **Zusammenfassung**

Fahrradträgersystem zur Befestigung an einem Fahrzeug, insbesondere einem Wohnmobil oder einem Kleintransporter, das eine Grundschiene zur Befestigung an dem Fahrzeug und wenigstens eine Fahrradschiene umfasst. Die Fahrradschiene ist auf der Grundschiene befestigt und hat ein Aufnahmeelement für die Aufnahme eines Segments des Vorder- und/oder des Hinterrads eines Fahrrads. Daneben hat das System wenigstens ein Stützelement zur seitlichen Abstützung und Sicherung des Fahrrads. Die Fahrradschiene ist entlang ihrer Länge senkrecht an der Heckseite des Fahrzeugs auf der Grundschiene befestigt und das Fahrrad liegt mit beiden Rädern hochkant an.

## Beschreibung

### TECHNISCHES GEBIET

Die Erfindung betrifft ein Fahrradträgersystem zur Befestigung an einem Fahrzeug, insbesondere einem Wohnmobil oder einem Kleintransporter, umfassend wenigstens eine Grundschiene zur Befestigung an dem Fahrzeug, und wenigstens eine Fahrradschiene, wobei die Fahrradschiene auf der Grundschiene befestigt ist und ein Aufnahmeelement für die Aufnahme eines Segments des Vorder- und/oder des Hinterrads eines Fahrrads aufweist, und wobei das System wenigstens ein Stützelement zur seitlichen Abstützung und Sicherung des Fahrrads aufweist.

### STAND DER TECHNIK

Auf dem Markt sind verschiedene Fahrradträgersysteme zur Montage an Fahrzeugen erhältlich. Vor allem bei Systemen, die nicht auf dem Dach des Fahrzeugs montiert werden, ist die Befestigung des Trägersystems an das Fahrzeug nur erschwert oder unter Zuhilfenahme von Hilfsmitteln wie einer Anhängerkupplung möglich. Hinzu kommt, dass bei diesen Montagearten zumeist die maximale Zuladung begrenzt ist, so dass nur eine begrenzte Anzahl von Fahrrädern transportiert werden kann. Daneben wird oftmals die Funktionalität und Bedienung des Fahrzeugs eingeschränkt, mit der Folge, dass Fahrzeugtüren teilweise oder gar nicht geöffnet werden können oder zusätzliche Beleuchtungs-, Kennzeichnungs- oder Stromelemente zum sicheren und ordnungsgemäßen Betrieb im Straßenverkehr erforderlich sind.

### AUFGABE DER ERFINDUNG

Der Erfindung liegt die Aufgabe zugrunde, einen kostengünstigen Fahrradträger mit einer einfachen Handhabung und flexibler und hoher Zuladungsmöglichkeit bereitzustellen.

### TECHNISCHE LÖSUNG

Die Aufgabe wird durch ein Fahrradträgersystem zur Befestigung an einem Fahrzeug, insbesondere einem Wohnmobil oder einem Kleintransporter, nach Anspruch 1 gelöst. Das System umfasst wenigstens eine Grundschiene mit einer Länge L_{G} zur Befestigung an dem Fahrzeug, und wenigstens eine Fahrradschiene mit einer Länge L_{F} mit einem unteren und oberen Ende, wobei die Fahrradschiene auf der Grundschiene befestigt ist und entlang der Länge L_{F} ein Aufnahmeelement für die Aufnahme eines Segments des Vorder- und/oder des Hinterrads eines Fahrrads aufweist, und wobei das System wenigstens ein Stützelement zur seitlichen Abstützung und Sicherung des Fahrrads aufweist, dadurch gekennzeichnet, dass die Fahrradschiene entlang der Länge L_{F} senkrecht an der Heckseite des Fahrzeugs auf der Grundschiene befestigt ist und das Fahrrad mit beiden Rädern hochkant anliegt.

Die erfindungsgemäße Grundschiene dient der Verbindung zwischen Fahrzeug und dem restlichen Fahrradträgersystem. Die Grundschiene weist dabei eine Länge L_{G} auf, die abhängig von dem Typ der jeweiligen Fahrzeugkategorie ist. Dabei kann die Grundschiene jede denkbare Form, wie z.B. ein Rohr, eine Stange oder ein Profil aufweisen. Auch kann die Grundschiene aus allen denkbaren Materialien, wie z.B. Stahl, Aluminium, etc. bestehen. Auf die Grundschiene wird mindestens eine Fahrradschiene mit der Länge L_{F} befestigt. Die Fahrradschiene hat ein Aufnahmeelement, das der Aufnahme von einem oder beiden Rädern, bzw. Segmenten davon, eines Fahrrads dient. Wie die Länge der Grundschiene L_{G} kann die Fahrradschiene an den Fahrzeugtyp angepasste Längen L_{F} haben und in verschiedenen Ausführungen gestaltet sein. So kann das Aufnahmeelement der Fahrradschiene aus unterschiedlichen Profilformen bestehen und ein oder mehrere Profile aufweisen, welche eine Aufnahme für den oder die Reifen bilden. In der Regel können beispielsweise zwei Fahrradschienen auf einer Grundschiene befestigt werden. Die Fahrradschiene kann aus allen hierfür geeigneten Materialien bestehen. Außerdem weist das erfindungsgemäße System ein Stützelement zur seitlichen Abstützung des Fahrrads auf. Durch das Stützelement wird die Seitenstabilität des aufgenommenen Fahrrads, z.B. bei Kurvenfahrt des Fahrzeugs, erhöht. Das Stützelement kann in verschiedenen Ausführungen ausgeformt sein, so dass beispielsweise einer oder beide Reifen oder der Rahmen des Fahrrads aufgenommen und/oder abgestützt werden kann.

Durch die senkrechte Befestigung der Fahrradschiene entlang der Länge L_{F} auf der am Fahrzeug befestigten Grundschiene, liegt das Fahrrad mit beiden Rädern hochkant an. Dadurch können mehrere Fahrräder nebeneinander angeordnet und transportiert werden. Die Montage ist hierbei erleichtert, da die Räder jeweils einzeln am Trägersystem angebracht und wieder entnommen werden können.

Das so beschriebene Trägersystem kann auch in mehrfacher, vorzugsweise in zweifacher Ausführung montiert werden, z.B. wenn das Fahrzeug zwei Hecktüren aufweist. Dadurch können mehrere Fahrräder gleichzeitig transportiert werden. Das Gewicht der Räder wird dabei auf die beiden Hecktüren verteilt.

Auf diese Weise ist gewährleistet, dass die Hecktüren auch bei voller Beladung noch geöffnet werden können, ohne dass die Fahrräder entfernt werden müssen. Zwei Trägersysteme können miteinander verbunden werden, um die Hecktüren, insbesondere das Türschloss, während der Fahrt zu entlasten und die Türen gegen ungewolltes Öffnen zu sichern. Alternativ können auf diese Weise auch die Fahrräder miteinander verbunden werden, um die Stabilität des Systems zu erhöhen.

Infolge der Montage an der Heckseite des Fahrzeugs sind keine Zusatzkennzeichen oder zusätzliche Beleuchtungselemente zum sicheren und ordnungsgemäßen Transport erforderlich. Daneben können die Hecktüren auch weiterhin uneingeschränkt geöffnet werden.

Bevorzugt ist die Grundschiene an der Heckseite des Fahrzeugs befestigt. Dies erfolgt bei kleineren Fahrzeugen wie z.B. Limousinen, Kombis oder SUVs im Bereich des Kofferraums oder der Heckklappe, bei größeren Fahrzeugen, wie Kasten-, Wohnmobilen oder -wägen im Bereich der Hecktür(en). Denkbar sind hierbei verschiedene Befestigungsmöglichkeiten, beispielweise, durch fixe Befestigung durch Schraubverbindung o.ä., durch Verklemmung oder mittels Haken. So können die Grundschienen durch längenverstellbare Haken auf die Türe des Fahrzeugs geklemmt werden. Die Haken werden an die Breite der Türe angepasst und durch entsprechende Mittel, z.B. eine Schraubverbindung, fixiert.

In einer bevorzugten Ausführung hat das Aufnahmeelement der Fahrradschiene entlang der Länge L_{F} eine Vertiefung und/oder eine Öffnung zur Aufnahme eines Segments des Vorder- und/oder des Hinterrads des Fahrrads.

Durch die Vertiefung oder Öffnung kann ein Teil des oder der Reifen aufgenommen und stabilisiert werden, so dass eine seitliche Verschiebung eingeschränkt ist, bzw. unterbunden wird.

Besonders bevorzugt kann die Vertiefung und/oder die Öffnung des Aufnahmeelements durch zwei langgestreckte Seitenelemente gebildet werden oder ein rinnenförmiges Profil aufweisen. So kann beispielsweise die Vertiefung, bzw. die Öffnung des Aufnahmeelements der Fahrradschiene aus zwei parallel geführten Profilen gebildet werden. Hierbei wird das aufgenommene Segment des oder der Reifen durch die Öffnung zwischen den Profilen aufgenommen und gehalten. Alternativ kann die Vertiefung durch ein Profil in Rinnen- oder U-Form gebildet werden.

Die Länge L_{F} der Fahrradschiene kann verstellbar sein. Dadurch kann die Schiene an unterschiedliche Längen, bzw. Größen von Fahrrädern (z.B. Kinder-, Jugend-, Erwachsenrad) angepasst werden. Die Fahrradschiene kann hierfür zwei- oder mehrteilig ausgeführt sein.

Bevorzugt weist das Stützelement mindestens eine drehbare Stützvorrichtung auf und ist zur Fahrradschiene verschwenkbar und weist mindestens ein Element zur Befestigung des Fahrradrahmens auf.

Dabei wird der Rahmen des Fahrrads vorzugsweise im Bereich des Unterrohrs befestigt.

Zusammen mit der Befestigung der Reifen kann das Fahrrad dadurch an einem weiteren Punkt befestigt werden und die Stabilität erhöht werden. Zur besseren Handhabung ist die Stützvorrichtung schwenkbar ausgeführt, so dass nach Befestigung des Fahrrads in der Fahrradschiene im Anschluss der Rahmen fixiert werden kann.

In einer weiteren Ausführung der Erfindung besteht das Stützelement aus wenigstens einer Stützschiene, die am unteren Ende der Länge L_{F} der Fahrradschiene angebracht ist und die in eine ungefähr senkrechte Lage relativ zur Länge L_{F} der Fahrradschiene zum Abstützen des Rads des Fahrrads verschwenkbar ist. Durch die Stützschiene wird vorzugsweise das Hinterrad des Fahrrads aufgenommen und nach unten hin abgestützt. Die Stützschiene kann auch als Bügel ausgeführt sein, wodurch das aufgenommene Rad auch seitlich abgestützt wird. Die Schiene ist verschwenkbar ausgeführt, um sie im unbeladenen Zustand des Trägersystems zur Fahrradschiene zu klappen. Dadurch wird auch die Länge des Fahrzeugs reduziert, was die Bedienung, beispielsweise beim Einparken und Rangieren, erheblich erleichtert.

In vorteilhafter Weise ist die Stützschiene am unteren Ende der Länge L_{F} der Fahrradschiene gelenkig gelagert und verschwenkbar und ist in wenigstens zwei verschiedenen Winkelstellungen fixierbar. Dadurch kann die Stützschiene je nach Beladungszustand mit einem Fahrrad verschwenkt werden. Im Falle des unbeladenen Zustands kann die Stützschiene platzsparend zur Fahrradschiene hin geklappt werden. Die Fixierung der Stützschiene erfolgt durch ein geeignetes Element, wie z.B. einer Zugstange, die ihrerseits klappbar ist. Daneben kann die Zugstange die Stützschiene zusätzlich noch abstützen bzw. stabilisieren. Vor allem die seitliche Stabilität der Stützschiene kann auf diese Weise erhöht werden.

In einer Ausführung der Erfindung besteht die Stützschiene aus mehreren Elementen, die gelenkig gelagert sind, um sich der Form des Rads des Fahrrads anzupassen. Hierdurch wird eine ideale Aufnahme und Abstützung des Rads erzielt. Auch hierbei kann die Stützschiene durch ein geeignetes Element, wie z.B. einer Zugstange, fixiert und ggf. abgestützt werden.

Bevorzugt hat das System ein Abstandselement , wobei das Abstandselement wenigstens eine Unterseite und wenigstens eine Oberseite aufweist und mit wenigstens einer Unterseite auf der Grundschiene befestigt ist und wobei wenigstens eine Fahrradschiene auf der Oberseite des Abstandselements befestigt ist.

Mit dem Abstandselement wird ein Abstand zwischen der auf dem Fahrzeug befestigten Grundschiene und der Fahrradschiene hergestellt, wodurch die aufgenommenen Fahrradreifen tiefer in die Aufnahme, bzw. Öffnung des Aufnahmeelements der Fahrradschiene eintauchen können, was beispielsweise bei der Ausführungsformen mit zwei parallelen Profilen des Aufnahmeelements für größere seitliche Stabilität des Fahrrads sorgt. Das Abstandselement kann vorzugsweise in Form eines Bügels oder in anderer geeigneter Form ausgestaltet sein.

In einer vorteilhaften Ausführung der Erfindung hat das Trägersystem ein Verbindungselement zur Verbindung entlang der Länge L_{G} von mindestens zwei auf gleicher Höhe liegenden Grundschienen. Dadurch können zwei Trägersysteme miteinander verbunden werden, um zusätzliche Stabilität entlang der Länge L_{G} zu erreichen. So werden die Hecktüren, insbesondere das Türschloss während der Fahrt entlastet und die Türen gegen ungewolltes Öffnen gesichert. Geeignete Verbindungselemente sind, z.B. Schnellspanner oder Ähnliches.

### KURZE BESCHREIBUNG DER FIGUREN

- Figur 1: Darstellung eines vollständig montiertes Fahrradträgersystems. Auf zwei Grundschienen mit Abstandselementen in Form von Bügeln sind zwei längenverschiebbare Fahrradschienen zur Befestigung von zwei Fahrrädern befestigt. Die Fahrradschienen bestehen aus jeweils zwei Profilen, die die Räder eines Fahrrads teilweise aufnehmen. Auf Höhe des unteren Bügels befindet sich ein Stützelement in Form eines klappbaren Bügels zur Aufnahme und seitlichen Abstützung des Hinterrads eines Fahrrads;
- Figur 2: Querschnitt eines Aufnahmeelements einer Fahrradschiene mit einem Rinnenprofil;
- Figur 3a: Querschnitt eines Aufnahmeelements einer Fahrradschiene welches aus zwei Rohrprofilen gebildet wird;
- Figur 3b: Querschnitt eines Aufnahmeelements einer Fahrradschiene mit zwei Rohrprofilen mit einem aufgenommen Reifen eines Fahrrads;
- Figur 4a: Darstellung einer Fahrradschiene mit einem Aufnahmeelement gebildet aus einem Rinnenprofil, die mit der Grundschiene durch Verschraubung verbunden ist.
- Figur 4b: Darstellung einer Fahrradschiene mit einem Aufnahmeelement gebildet aus zwei Rohrprofilen mit einem verbundenem Verbindungselement mit Seitenflügeln, die durch Verschraubung an den Seitenflügeln mit der Grundschiene verbunden ist.
- Figur 4c: Darstellung einer Fahrradschiene mit einem Aufnahmeelement gebildet aus mit zwei Rohrprofilen mit einem verbundenem Verbindungselement, die durch mittige Verschraubung mit der Grundschiene verbunden ist.
- Figur 4d: Darstellung einer Fahrradschiene mit einem Aufnahmeelement gebildet aus zwei Rohrprofilen und einem verbundenem Verbindungselement in Form einer Einhängetasche, die mit der Grundschiene durch Einhängen verbunden ist.
- Figur 4e: Darstellung einer Fahrradschiene mit einem Aufnahmeelement gebildet aus zwei Rohrprofilen und mit einem verbundenem Verbindungselement in Form einer klemmbaren Einhängetasche, die mit der Grundschiene durch Verklemmung verbunden ist.
- Figur 5a: Seitenansicht einer Fahrradschiene mit ausgeklappten gelenkigen Stützelement, dessen Form an den Reifenradius angepasst ist und von einem klappbaren Zugstab gehalten wird;
- Figur 5b: Seitenansicht der Fahrradschiene gemäß Figur 5a mit eingeklapptem Stützelement und Zugstab;
- Figur 6a: Seitenansicht einer mit einem Fahrrad beladenen Fahrradschiene mit ausgeklappten Stützelement, in Form eines Bügels zur Aufnahme der Hinterreifens und ausgeklappten Zugstab zum Abstützen des Stützelements;
- Figur 6b: Seitenansicht der Fahrradschiene gemäß Figur 6a mit eingeklappten Stützelement und Zugstab;
- Figur 6c: Draufsicht der Fahrradschiene gemäß Figur 6b mit eingeklappten Stützelement;

### BESCHREIBUNG BEVORZUGTER AUSFÜHRUNGSBEISPIELE

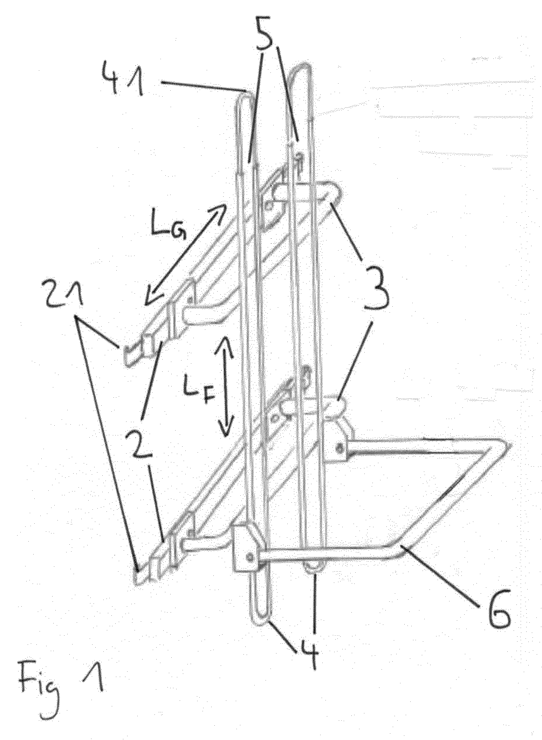

Aus Figur 1 ist eine Ausführungsform des erfindungsgemäßen Fahrradträgersystems ersichtlich. Das System weist zwei Grundschienen 2 mit der Länge L_{G} zur horizontalen Befestigung an der Heckseite eines Fahrzeugs (nicht dargestellt), vornehmlich an einer Heckflügeltüre eines Wohnmobils oder Transporters, auf. Zur Befestigung an der Türe hat jede Grundschiene 2 an beiden Enden der Länge L_{G} jeweils einen verstellbaren Haken 21, der an die individuelle Breite der Türe angepasst werden und optional mit einem geeigneten Befestigungsmittel (nicht dargestellt) arretiert werden kann. Auf die Grundschienen 2 ist in dieser Ausführungsform das optionale Abstandselement 3 in Form eines Bügels befestigt. Auf den Bügeln sind zwei Fahrradschienen 4 mit der Länge L_{F} befestigt. Durch das Abstandselement 3 wird ein Abstand zwischen den auf der Fahrzeugtür befestigten Grundschienen 2 und den Fahrradschienen 4 erzeugt. Die Fahrradschienen 4 weisen Aufnahmeelemente 5 zur Aufnahme des Vorder- und Hinterrad des Fahrrads auf. Das Aufnahmeelement 5 wird in der vorliegenden Ausführung durch zwei parallel angeordnete Profile in Form von Rohrprofilen gebildet. Dadurch ist es möglich, dass der oder die Reifen des Fahrrads zwischen den Profilen aufgenommen werden können und seitlich stabilisiert werden. Infolge der Beabstandung durch das Abstandselement 3 können die Reifen tiefer aufgenommen werden, bzw. tiefer in die Öffnung der Profile eintauchen, wodurch ein sicherer Halt erzeugt wird. Die Fahrradschienen 4 sind mehrteilig, bzw. Rohr in Rohr ausgeführt. So kann die Länge L_{F} zum oberen Ende 41 verstellt werden und mit geeigneten Mitteln, z.B. einer Madenschraube (nicht dargestellt) fixiert werden. Durch die Möglichkeit der Längenverstellung kann die Fahrradschiene an unterschiedliche Fahrradgrößen angepasst werden. Das erfindungsgemäße System weist ferner ein Stützelement 6 in Form eines klappbaren Bügels auf, der bei dieser Ausführung am unteren Bügel 3 befestigt ist. Das Stützelement 6 nimmt das Hinterrad auf und gibt somit Halt nach unten. Daneben gibt die Bügelform des Stützelements 6 auch eine seitliche Abstützung und erhöht somit die Seitenstabilität. Im Falle der Nichtbenutzung des Fahrradträgers kann das Stützelement 6 platzsparend nach oben zur Fahrradschiene 4 geklappt werden, wodurch die Größe des Trägersystems deutlich reduziert wird.

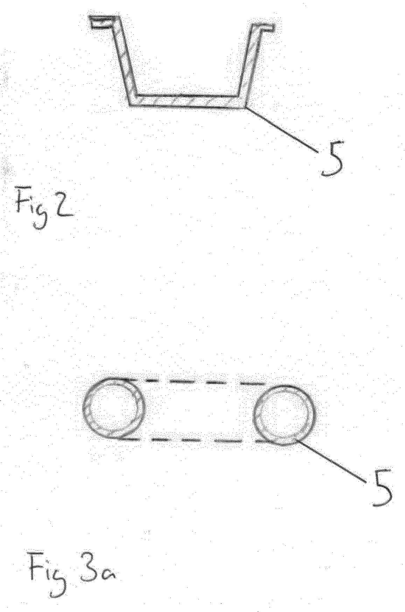

Figur 2 zeigt den Querschnitt eines Aufnahmeelements 5 einer Fahrradschiene 4 mit einem Rinnenprofil zur Aufnahme eines Segments des Vorder- und/oder Hinterreifens. Zur besseren Handhabung ist das Profil von der Oberseite hin verjüngend ausgeführt, um den Reifen besser in das Profil einbringen zu können. Die Lauffläche des Reifens liegt in seiner Endlage im unteren Bereich des Rinnenprofils auf und wird von den seitlichen Profilen abgestützt. Der oder die so in das Profil eingebrachten Reifen sind seitlich abgestützt und stabilisiert.

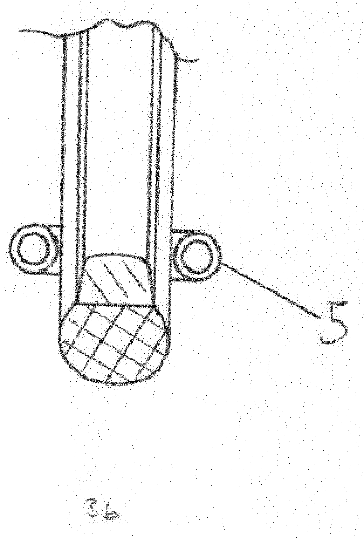

Figuren 3a und 3b zeigen den Querschnitt einer weiteren Ausführung eines Aufnahmeelements 5 einer Fahrradschiene 4, wobei Figur 3a den unbeladenen Zustand und Figur 3b den beladenen Zustand zeigen. Das Aufnahmeelement 5 wird durch zwei parallel liegende Rohrprofile gebildet. Der oder die Fahrradreifen tauchen in die von den Profilen gebildete Aufnahme, bzw. Öffnung ein und werden so seitlich gegen eventuelle Kippbewegungen stabilisiert.

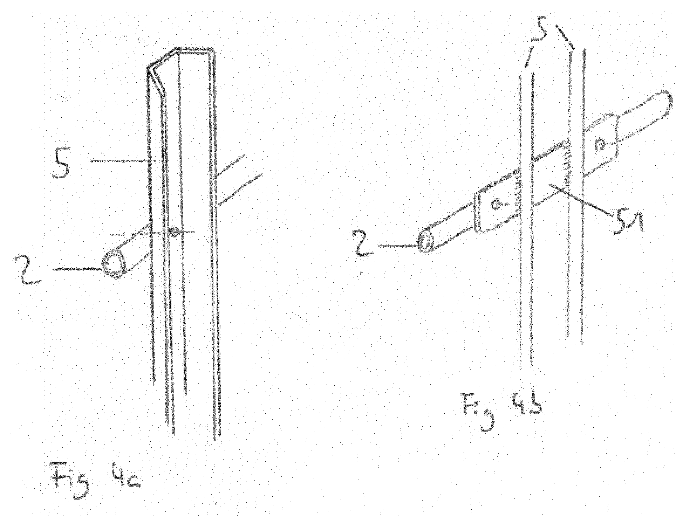

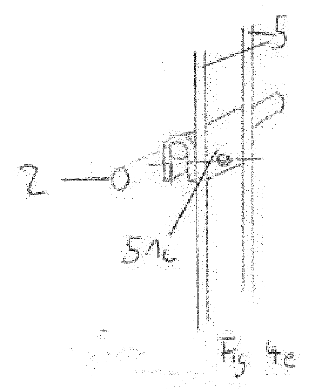

Die Figuren 4a bis 4e zeigen verschiedene Möglichkeiten der Verbindung der Fahrradschiene 4 mit, bzw. auf der Grundschiene 2. Dadurch soll gewährleistet sein, dass sich die Fahrradschiene 4 vor allem während der Fahrt, z.B. bei Kurvenfahrten, nicht verdrehen kann und eine sichere seitliche Abstützung des Fahrrads gegeben ist.

Hierbei zeigt Figur 4a eine Fahrradschiene 4 mit einem Aufnahmeelement 5 in Form eines Rinnenprofils zur Aufnahme eines Segments des Vorder- und/oder Hinterreifens entsprechend der Figur 2. Zur Verbindung mit der Grundschiene 2 hat das Aufnahmeelement 5 eine lochförmige Aufnahme 51 für ein Verbindungsmittel, wie z.B. einer Schraube (nicht dargestellt). Die Grundschiene 2 weist eine entsprechende Aufnahme (nicht dargestellt) auf, die ggf. mit einer Gewindestruktur für das Verbindungselement versehen ist. Die Verbindung der Fahrradschiene 4 mit der Grundschiene 2 erfolgt durch das Verbindungsmittel über die Aufnahmen der Fahrradschiene und der Grundschiene.

Figur 4b zeigt eine alternative Verbindungsmöglichkeit einer Fahrradschiene 4 auf der Grundschiene 2, deren Aufnahmeelement 5 entsprechend Figur 3a aus zwei parallel liegenden Rohrprofilen besteht. Dabei haben die Profile auf Höhe der Grundschiene 2 ein Verbindungselement 51, das seitlich überstehende Flügel aufweist. Das Verbindungselement 51 ist mit den Profilen des Aufnahmeelements 5 durch geeignete Verbindungsmethoden, z.B. Verschweißen etc., verbunden. An den seitlichen Flügeln des Verbindungselements 51 befinden sich jeweils Aufnahmen für Verbindungsmittel. Die Grundschiene 2 weist entsprechende Aufnahmen (nicht dargestellt) auf, die ggf. mit einer Gewindestruktur für die Verbindungsmittel versehen sein können. Durch die seitlichen Flügel des Verbindungselements 51 wird eine zusätzliche seitliche Abstützung der Fahrradschiene 4 in Bezug auf die Grundschiene 2 erzielt.

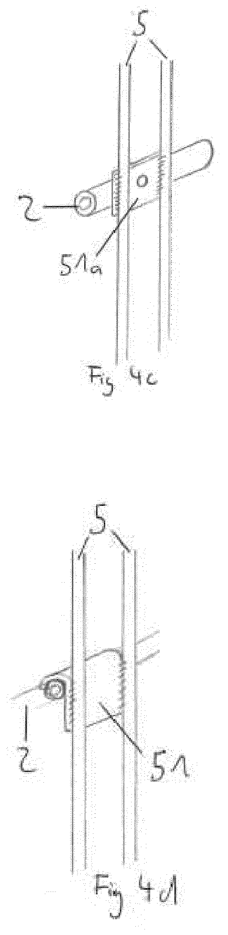

Figur 4c zeigt ein alternatives Verbindungselement 51 a zu dem in Figur 4b gezeigtem Element. Das Verbindungselement 51 a ist entsprechend dem Verbindungselement 51 verbunden, hat aber keine seitlichen Flügel. Die Aufnahme für das Verbindungsmittel ist in der Mitte des Verbindungselement 51 a angeordnet. Auch hier weist die Grundschiene 2 eine entsprechende Aufnahme auf.

Figur 4d zeigt ein weiteres Verbindungselement 51 b in Form einer Einhängelasche. Auch dieses Verbindungselement 51 b ist entsprechend der vorherigen Schilderung mit den Profilen des Aufnahmeelements 5 der Fahrradschiene 4 verbunden. Die Einhängelasche ist in einem abstehenden Bereich der Form der Grundschiene 4 angepasst und dient in diesem Bereich deren Aufnahme. Über das Verbindungselement 51 b wird die Fahrradschiene 4 auf der Grundschiene 2 eingehängt und mit dieser verbunden.

Figur 4d zeigt eine alternative Ausführung der Einhängelasche 51c. Die Einhängelasche 51c ist in dem Aufnahmebereich klemmbar ausgestaltet. Infolge der Klemmwirkung wird die Fahrradschiene mit der Grundschiene verbunden. Zusätzlich kann die Einhängelasche 51c eine Aufnahme für ein Verbindungselement (nicht dargestellt) aufweisen.

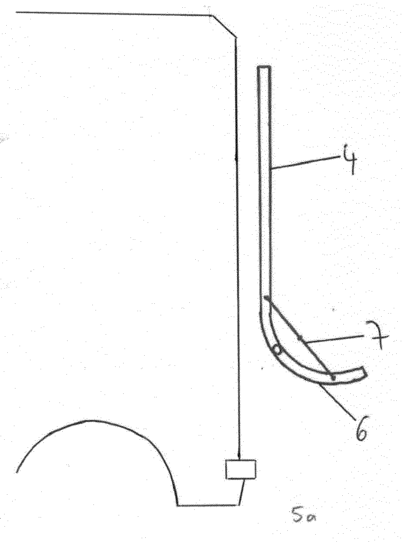

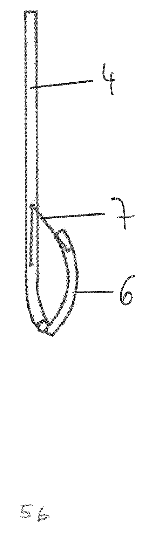

Figuren 5a und 5b zeigen die Seitenansicht einer weiteren Ausführung der Fahrradschiene 4 mit einem Stützelement 6. Der Rest des Trägersystems (Grundschiene, Bügel) ist in den Figuren nicht gezeigt. Die Fahrradschiene 4 weist ein Rinnenprofil entsprechend Figur 3a auf. Figur 5a zeigt das Stützelement 6 in ausgeklappter Position, in der Regel kurz vor der Montage des Fahrrads. Das Stützelement 6 ist gelenkig ausgeführt und kann sich so an den Radius des Reifens des Fahrrads anpassen. Ein klappbarer Zugstab 7 stützt das Stützelement 6 nach unten hin und seitlich ab. Aus Figur 5b ist ersichtlich, dass das Stützelement infolge einer Gelenkverbindung im unbeladenen Zustand zur Fahrradschiene platzsparend verschwenkt werden kann. Der Zugstab 7 wird dabei ebenfalls eingeklappt.

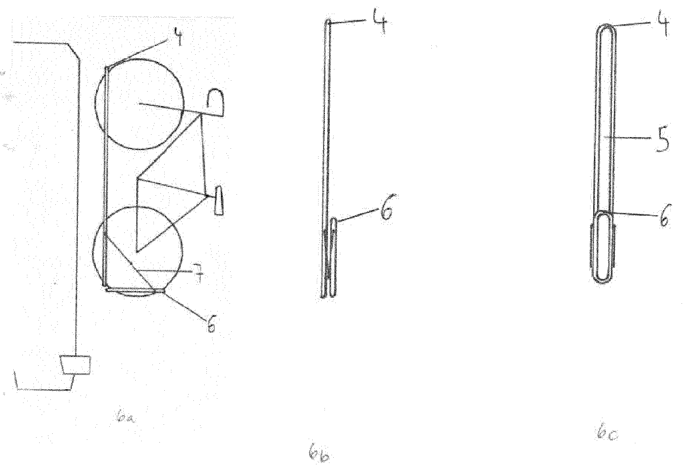

Figuren 6a bis 6c zeigen eine weitere Ausführung einer Fahrradschiene 4 samt Stützelement 6. Auch hier ist der Rest des Trägersystems (Grundschiene, Bügel) in den Figuren nicht dargestellt. Das Aufnahmeelement 5 der Fahrradschiene 4 wird durch zwei Rohrprofile entsprechend Figur 3b gebildet. Figur 6a zeigt das Stützelement 6 in ausgeklappter Position im beladenen Zustand, wobei die Räder des Fahrrads in der Öffnung zwischen den beiden Profilen stecken und vom Stützelement 6 nach unten abgestützt werden. Dadurch wird Stabilität nach unten und zur Seite erzeugt. Ein klappbarer Zugstab 7 stützt das Stützelement 6 nach unten hin und seitlich ab. Aus Figur 6b ist ersichtlich, dass das Stützelement 6 infolge einer Gelenkverbindung im unbeladenen Zustand zur Fahrradschiene 4 hin platzsparend verschwenkt werden kann. Der Zugstab 7 wird dabei ebenfalls eingeklappt. Figur 6c zeigt die Draufsicht auf die erfinderische Fahrradschiene 4. Dabei ist deutlich erkennbar, dass das Aufnahmeelement 5 der Fahrradschiene 4 und Stützelement 6 aus zwei parallelen Profilen bestehen.

## Patentansprüche

1. Fahrradträgersystem (1) zur Befestigung an einem Fahrzeug, insbesondere einem Wohnmobil oder einem Kleintransporter umfassend
wenigstens eine Grundschiene (2) mit einer Länge L_{G} zur Befestigung an dem Fahrzeug, und wenigstens eine Fahrradschiene (4) mit einer Länge L_{F} mit einem unteren (31) und oberen Ende (32), wobei die Fahrradschiene (3) auf der Grundschiene (2) befestigt ist und entlang der Länge L_{F} ein Aufnahmeelement (5) für die Aufnahme eines Segments des Vorder- und/oder des Hinterrads eines Fahrrads aufweist, und wobei das System (1) wenigstens ein Stützelement (6) zur seitlichen Abstützung und Sicherung des Fahrrads aufweist,
**dadurch gekennzeichnet, dass** die Fahrradschiene (4) entlang der Länge L_{F} senkrecht an der Heckseite des Fahrzeugs auf der Grundschiene (2) befestigt ist und das Fahrrad mit beiden Rädern hochkant anliegt.

2. System (1) nach Anspruch 1, wobei die Grundschiene (2) an der Heckseite des Fahrzeugs befestigt ist.

3. System (1) nach den vorhergehenden Ansprüchen, wobei das Aufnahmeelement (5) der Fahrradschiene (4) entlang der Länge L_{F} eine Vertiefung und/oder eine Öffnung zur Aufnahme eines Segments des Vorder- und/oder des Hinterrads des Fahrrads aufweist.

4. System (1) nach Anspruch 3, wobei die Vertiefung und/oder die Öffnung des Aufnahmeelements (5) durch zwei langgestreckte Seitenelemente gebildet wird oder ein rinnenförmiges Profil aufweist.

5. System (1) nach einem der Ansprüche 3 oder 4, wobei die Länge L_{F} der Fahrradschiene (4) verstellbar ist.

6. System (1) nach den vorhergehenden Ansprüchen, wobei das Stützelement (6) mindestens eine drehbare Stützvorrichtung aufweist und zur Fahrradschiene (4) verschwenkbar ist und mindestens ein Element zur Befestigung des Fahrradrahmens aufweist.

7. System (1) nach den vorhergehenden Ansprüchen, wobei das Stützelement (6) aus wenigstens einer Stützschiene besteht, die am unteren Ende der Länge L_{F} der Fahrradschiene (4) angebracht ist und die in eine ungefähr senkrechte Lage relativ zur Länge L_{F} der Fahrradschiene (4) zum Abstützen des Rads des Fahrrads verschwenkbar ist.

8. System (1) nach Anspruch 7, wobei die Stützschiene (6) am unteren Ende der Länge L_{F} der Fahrradschiene (4) gelenkig gelagert ist und verschwenkbar ist und in wenigstens zwei verschiedenen Winkelstellungen fixierbar ist.

9. System (1) nach den vorhergehenden Ansprüchen 7 und 8, wobei die Stützschiene (6) aus mehreren Elementen besteht, die gelenkig gelagert sind, um sich der Form des Rads des Fahrrads anzupassen.

10. System (1) nach den vorhergehenden Ansprüchen, umfassend wenigstens ein Abstandselement (3), wobei das Abstandselement (3) wenigstens eine Unterseite und wenigstens eine Oberseite aufweist und mit wenigstens einer Unterseite auf der Grundschiene (2) befestigt ist, und wobei wenigstens eine Fahrradschiene (4) auf der Oberseite des Abstandselements (3) befestigt ist.

11. System (1) nach den vorhergehenden Ansprüchen, das ein Verbindungselement zur Verbindung entlang der Länge L_{G} von mindestens zwei auf gleicher Höhe liegenden Grundschienen (2) aufweist.
